(19) Europäisches Patentamt
European Patent Office
Office européen des brevets

(11) **EP 3 512 010 A1**

(12) **EUROPEAN PATENT APPLICATION**
published in accordance with Art. 153(4) EPC

(43) Date of publication:
**17.07.2019 Bulletin 2019/29**

(51) Int Cl.:
*H01M 4/38* (2006.01)      *C01B 32/20* (2017.01)
*H01M 4/133* (2010.01)     *H01M 4/134* (2010.01)
*H01M 4/36* (2006.01)      *H01M 4/587* (2010.01)

(21) Application number: **17848877.1**

(22) Date of filing: **08.09.2017**

(86) International application number:
**PCT/JP2017/032440**

(87) International publication number:
**WO 2018/047939 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.09.2016 JP 2016176145**

(71) Applicants:
• **Showa Denko K.K.**
**Tokyo 105-8518 (JP)**

• **Umicore**
**1000 Brussels (BE)**

(72) Inventors:
• **KURITA Takayuki**
**Tokyo 105-8518 (JP)**
• **OTSUKA Yasunari**
**Tokyo 105-8518 (JP)**
• **ISHII Nobuaki**
**Tokyo 105-8518 (JP)**

(74) Representative: **Strehl Schübel-Hopf & Partner
Maximilianstrasse 54
80538 München (DE)**

(54) **NEGATIVE ELECTRODE MATERIAL FOR LITHIUM ION SECONDARY CELL**

(57)      The negative electrode material for a lithium-ion secondary battery comprising:

Composite (A) having Dv50 of 3.0 $\mu$m or more and 20.0 $\mu$m or less; comprising:

Particles (A1), which are formed of a substance comprising an element capable of occluding and releasing lithium ions and not comprising graphite and have Dn50 of 70 nm or less,

Particles (A2), which are formed of a substance comprising graphite and have Dv50 of 3.0 $\mu$m or more and 20.0 $\mu$m or less and a BET specific surface area of 1.0 to 10.0 m$^2$/g, and

Carbonaceous material (A3), which is a carbonized substance of an organic substance formed on a surface of the Particles (A1);

a first graphite-containing substance (B) having Dv50 of 5.0 $\mu$m or more and 20.0 $\mu$m or less; and

a second graphite-containing substance (C) having Dv50 of 1.0 $\mu$m or more and 10.0 $\mu$m or less;

wherein Dv50 of the graphite-containing substance (B) is larger than that of the graphite-containing substance (C) by 4.0 $\mu$m or more. A lithium-ion secondary battery obtained by using the negative electrode material can attain both of a high electrode density and a high capacity retention rate.

**Description**

Technical Field

The present invention relates to a negative electrode material for lithium-ion secondary batteries. Specifically, the present invention relates to a negative electrode material having a high energy density for lithium-ion secondary batteries which batteries can attain a high electrode density and a high capacity retention rate at the same time.

Background Art

Multi-functionalization of a portable electronic device has proceeded faster than power saving of an electronic component. Therefore, the portable electronic device has been increased in power consumption. In consequence, a lithium-ion secondary battery serving as a main power supply of the portable electronic device has been required to have a high capacity and a small size more strongly than ever before. In addition, along with growing demand for an electric vehicle, also a lithium ion battery to be used in the electric vehicle has been strongly required to have a high capacity.

In order to meet such a need, a negative electrode material comprising a composite of Si particles and a carbon material has been proposed. However, although a composite material of Si particles and a carbon material has a high capacity, it considerably deteriorates due to the volume change at the time of charge and discharge which is peculiar to Si. In order to deal with the problem, various measures have been taken such as making Si into nanoparticles, employing a coating material onto Si, and doping a different metal to Si. Actually, the cycle characteristics have been improved while maintaining a high capacity by these measures.

However, the following problems have been caused. Battery characteristics have been reduced due to the resistance peculiar to Si or a coating material contained in the composite material. In addition, a composite material having a larger particle diameter than a single substance of Si or a carbon material is difficult to collapse at the time of producing an electrode and the electrode density becomes difficult to increase at the time of pressing during the production of an electrode using the negative electrode material.

Accordingly, it has been proposed to further add a carbon material other than the composite at the time of producing an electrode. For example, Patent Document 1 discloses a netative electrode for a lithium-ion secondary battery, comprising a negative electrode material which comprises composite particles obtained by assembling or binding first particles containing carbonaceous material A and second particles containing silicon atoms with carbonaceous substance B, which is different from the carbonaceous substance A; and graphite particles having an average interplanar spacing d002 of 0.335 nm or to 0.347 nm and having a volume average particle diameter of 1 μm to 20 μm as an assistant, wherein the first particles are graphite particles having fine pores, which are obtained by allowing multiple flat particles to assemble or combine so as not to orient the plane in parallel, and wherein the second particles are concentrated close to the surface rather than the inside of the composite particles.

Patent Document discloses a non-aqueous electrolytic secondary battery using as a negative electrode material a mixture of substance (A) obtained by coating a surface of silicon particles with a carbon material, and substance (B) comprising a carbon material that is characterized in that the BET specific surface area of the substance (A) is 1.0 to 10.0 $m^2$/g; that an average interplanar spacing d002 of the carbon that covers the surface of silicon particles in the substance (A) by an X-ray diffraction method is 0.3354 nm to 0.35 nm; that the carbon coating amount in the substance the substance (A) is 5 to 60 mass%; and that the ratio of the substance (B) to the total amount of the substance (A) and the substance (B) falls within the range of 0.5 to 40 mass%.

Patent Document 3 discloses a non-aqueous secondary battery using an alloy material comprising at least one member selected form Si, Sn and a compound thereof as an active material, which battery comprises a negative electrode containing a conductive assistant, a positive electrode and a non-aqueous electrolyte, and is characterized in that the alloy material contains SiO; that the alloy material is integrated with the conductive assistant; that the ratio of the alloy material to the total amount of the alloy material and the carbon material is 1 to 30 wt%; and that the average particle diameter of the alloy material is 2/5 or less of the average particle diameter of the carbon material.

Patent Document 4 discloses a non-aqueous electrolytic secondary battery comprising a positive electrode, a negative electrode containing a negative electrode collector and a negative electrode layer supported on the negative electrode collector, and a non-aqueous electrolyte; characterized in that the negative electrode layer comprises composite particles having a 50% particle diameter, D50, of 20 to 40 μm, containing Si-containing particles and a carbonaceous layer which is formed at least a part of the surface of the Si-containing particles, first graphite particles having a 50% particle diameter, D50, of 5 to 20 μm, and second graphite particles having a 50% particle diameter, D50, of 2 to 10 μm; and that the negative electrode layer has a density of 1.1 to 1.4 g/$cm^3$.

Prior Art

Patent Document

[Patent Document 1] JP 5799500 B
[Patent Document 2] JP 4320526 B (US 8092940 B2)
[Patent Document 3] JP 5046302 B
[Patent Document 4] JP 2004-95306 A

Disclosure of the Invention

Problem to be Solved by the Invention

An objective of the present invention is to provide a negative electrode material to obtain a lithium ion secondary battery having excellent battery characteristics.
The present invention includes the following embodiments.

[1] A negative electrode material for a lithium-ion secondary battery comprising:

Composite (A) having a 50% particle diameter in a volume-based cumulative particle diameter distribution, Dv50, of 3.0 $\mu$m or more and 20.0 $\mu$m or less; comprising:

Particles (A1), which are formed of a substance comprising an element capable of occluding and releasing lithium ions and not comprising graphite and have a 50% particle diameter in a number-based cumulative particle diameter distribution, Dn50, of primary particles of 70 nm or less,
Particles (A2), which are formed of a substance comprising graphite and have Dv50 of 3.0 $\mu$m or more and 20.0 $\mu$m or less and a BET specific surface area of 1.0 to 10.0 m$^2$/g, and
Carbonaceous material (A3), which is a carbonized substance of an organic substance formed on a surface of the Particles (A1);
a first graphite-containing substance (B) having Dv50 of 5.0 $\mu$m or more and 20.0 $\mu$m or less; and
a second graphite-containing substance (C) having Dv50 of 1.0 $\mu$m or more and 10.0 $\mu$m or less;

wherein the ratio of the Particles (A1) to the total of the Particles (A1), the Particles (A2) and the Carbonaceous material (A3) is 2 mass% or more and 40 mass% or less;
Dv50 of the graphite-containing substance (B) is larger than that of the graphite-containing substance (C) by 4.0 $\mu$m or more; and
the ratio of the Composite (A) to the total of the Composite (A), the graphite-containing substance (B) and the graphite-containing substance (C) is 4 mass% and more and 85 mass% or less.

[2] The negative electrode material for a lithium-ion secondary battery according to [1] above, wherein the element capable of occluding and releasing lithium ions contained in the Particles (A1) is at least one member selected from a group consisting of Si, Sn, Ge, Al and In.
[3] The negative electrode material for a lithium-ion secondary battery according to [1] or [2] above, wherein the Particles (A2) include substance derived from petroleum-based coke and/or pitch-based coke.
[4] The negative electrode material for a lithium-ion secondary battery according to any one of [1] to [3] above, wherein the Parciles (A2) are non-flaky artificial graphite particles and have a ratio between a peak intensity I110 of (110) plane and a peak intensity I004 of (004) plane of a graphite crystal determined by a powder X-ray diffraction method, I110/I004, is 0.10 or more and 0.35 or less; an average interplanar spacing d002 of (002) plane by an X-ray diffraction method is 0.3360 nm or less; an average circularity is 0.80 or more and 0.95 or less; and a total pore volume of pores having a diameter of 0.4 $\mu$m or less measured by a nitrogen gas adsorption method is 5.0 $\mu$l/g or more and 40.0 $\mu$l/g or less;
wherein SOP, AROP and Dv50 satisfy the following relationships:

$$1.5 \leq AROP \leq 6.0$$

and

$$0.20 \times Dv50 \le (SOP \times AROP)^{1/2} < 2.00 \times Dv50$$

wherein, for optical structures observed in a cross-section of the artificial graphite particles by a polarizing microscope; when areas of the optical structures are accumulated from a smallest optical structure in an ascending order, SOP is defined as an area of an optical structure whose accumulated area corresponds to 60% of a total area of all the optical structures;

when the optical structures are counted from an optical structure of a smallest aspect ratio in an ascending order, AROP is defined as an aspect ratio of an optical structure which ranks at a position of 60% in a total number of all the optical structures.

[5] The negative electrode material for a lithium-ion secondary battery according to [4] above, wherein both of the graphite-containing substance (B) and the graphite-containing substance (C) are non-flaky artificial graphite particles and have a ratio between a peak intensity I110 of (110) plane and a peak intensity I004 of (004) plane of a graphite crystal determined by a powder X-ray diffraction method, I110/I004, is 0.10 or more and 0.35 or less; an average interplanar spacing d002 of (002) plane by an X-ray diffraction method is 0.3360 nm or less; an average circularity is 0.80 or more and 0.95 or less; and a total pore volume of pores having a diameter of 0.4 $\mu$m or less measured by a nitrogen gas adsorption method is 5.0 $\mu$l/g or more and 40.0 $\mu$l/g or less;

wherein, SOP, AROP and Dv50 satisfy the following relationships:

$$1.5 \le AROP \le 6.0$$

and

$$0.20 \times Dv50 \le (SOP \times AROP)^{1/2} < 2.00 \times Dv50$$

wherein, for optical structures observed in a cross-section of the artificial graphite particles by a polarizing microscope; when areas of the optical structures are accumulated from a smallest optical structure in an ascending order, SOP is defined as an area of an optical structure whose accumulated area corresponds to 60% of a total area of all the optical structures;

when the optical structures are counted from an optical structure of a smallest aspect ratio in an ascending order, AROP is defined as an aspect ratio of an optical structure which ranks at a position of 60% in a total number of all the optical structures.

[6] A negative electrode sheet having a current collector and a negative electrode layer which covers the current collector, wherein the negative electrode layer comprises a binder, a conductive assistant, and the negative electrode material for a lithium-ion secondary battery according to any one of [1] to [5] above.

[7] A lithium-ion secondary battery comprising the negative electrode sheet according to [6] above.

Effects of Invention

A lithium-ion secondary battery obtained by using the negative electrode material according to an embodiment of the present invention has an effect of attaining both of a high electrode density and a high capacity retention rate.

Specifically, the negative electrode according to an embodiment of the present invention comprises particles (A1) having Dn50 of 70 nm or less, and therefore even when the volume expansion and contraction of the particles (A1) are caused by charge and discharge, it has less impact on the structure of composite (A) containing the particles (A1). Accordingly, the capacity retention rate is significantly improved. In addition, since carbonaceous material (A3) is formed on the surface of the particles (A1), side reactions on the surface of the particles (A1) can be suppressed, resulting in improvement of the coulomb efficiency. Furthermore, the composite (A) has Dv50 of 3.0 $\mu$m or more and 20.0 $\mu$m or less, resulting in the improved coulomb efficiency and good handling at the time of producing an electrode.

In addition, by obtaining a negative electrode by adding graphite-containing substance (B) and graphite-containing substance (C) having a smaller Dv50 than the graphite-containing substance (B) to composite (A), the electron conductivity and the Li-ion diffusivity are improved and the resistance is reduced. Since the graphite-containing substance (C) has a smaller Dv50 than the graphite-containing substance (B), the graphite-containing substance (C) enters between the particles of the composite (A) and the graphite-containing substance (B) or the particles of the graphite-containing substance (B), and as a result, the electrode density increases.

Mode for carrying out invention

The negative electrode material for a lithium-ion secondary battery according to an embodiment of the present invention comprises composite (A) containing particles (A1), particles (A2) and carbonaceous material (A3); graphite-containing substance (B); and graphite-containing substance (C) .

(1) Particles (A1)

Particles (A1) used in an embodiment of the present invention contain an element capable of storing and releasing lithium ions and does not contain graphite.
Preferable examples of the element capable of storing and releasing lithium ions contained in the particles (A1) include Sb, Pb, Ag, Mg, Zn, Ga, Bi, Si, Sn, Ge, Al and In. Among these, preferred is Si, Sn Ge, Al or In, and Si is more preferable from the viewpoint of heat resistance. Examples of the particles (A1) include a simple substance of those elements, and a compound, a mixture, a eutectic material, and a solid solution each containing at least one kind of those elements. In addition, the particles (A1) before being integrated with the particles (A2) and the carbonaceous material (A3) may be an aggregate of a plurality of ultrafine particles, i.e. secondary particles. The particles (A1) each have a form of, for example, a lump form, a flake shape, a spherical shape, or a fibrous form. Of those, a spherical shape or a lump form is preferred.
As a substance containing a Si element, there is given an elemental Si or a substance represented by the formula: $M^a_m Si$. The substance is a compound, a mixture, a eutectic material, or a solid solution containing element $M^a$ at a ratio of m mol with respect to 1 mol of Si.
$M^a$ represents an element except Si and Li. Specific examples of the element represented by $M^a$ include B, C, N, O, S, P, Na, Mg, Al, K, Ca, Ti, V, Cr, Mn, Fe, Co, Ni, Cu, Zn, Mo, Ru, Rh, Pd, Pt, Be, Nb, Nd, Ce, W, Ta, Ag, Au, Cd, Ga, In, Sb, and Ba. In the formula, m represents preferably 0.01 or more, more preferably 0.10 or more, still more preferably 0.30 or more.
Specific examples of the substance containing a Si element include: an elemental Si; an alloy of Si and an alkaline earth metal; an alloy of Si and a transition metal; an alloy of Si and a semimetal; a solid solution-type alloy or eutectic alloy of Si and Be, Ag, Al, Au, Cd, Ga, In, Sb, or Zn; silicides such as $CaSi$, $CaSi_2$, $Mg_2Si$, $BaSi_2$, $Cu_5Si$, $FeSi$, $FeSi_2$, $CoSi_2$, $Ni_2Si$, $NiSi_2$, $MnSi$, $MnSi_2$, $MoSi_2$, $CrSi_2$, $Cr_3Si$, $TiSi_2$, $Ti_5Si_3$, $NbSi_2$, $NdSi_2$, $CeSi_2$, $WSi_2$, $W_5Si_3$, $TaSi_2$, $Ta_5Si_3$, $PtSi$, $V_3Si$, $VSi_2$, $PdSi$, $RuSi$ and $RhSi$; and $SiO_2$, $SiC$, and $Si_3N_4$.
As a substance containing a Sn element, there are given, for example, an elemental tin, tin alloy, tin oxide, tin sulfide, tin halide, and stannide. Specific examples of the substance containing a Sn element include: an alloy of Sn and Zn, an alloy of Sn and Cd, an alloy of Sn and In, and an alloy of Sn and Pb; tin oxides such as $SnO$, $SnO_2$, and $M^b_4SnO_4$ ($M^b$ represents a metal element except Sn and Li); tin sulfides such as $SnS$, $SnS_2$, and $M^b_2SnS_3$ ($M^b$ represents a metal element except Sn and Li); tin halides, such as $SnX_2$, $SnX_4$ and $M^bSnX_4$ ($M^b$ represents a metal element expect Sn and Li, and X represents a halogen atom); and stannides such as $MgSn$, $Mg_2Sn$, $FeSn$, $FeSn_2$, $MoSn$ and $MoSn_2$.
The surface of the particles (A1) may be oxidized. The surface may be naturally oxidized or artificially oxidized. The particles (A1) are to be coated with a thin oxide film by the oxidation. The thin oxide film suppresses the aggregation of the Si particles. In addition, risk in handling can be reduced because the reactivity is suppressed.
The particles (A1) has a 50% particle diameter, Dn50, in a number-based cumulative particle size distribution of primary particles of preferably 5 nm or more, more preferably 10 nm or more, and most preferably 30 nm or more. Dn50 of the primary particles is 70 nm or less, preferably 50 nm or less. When Dn50 of the primary particles of the particles (A1) exceeds 70 nm, expansion and contraction of the particles (A1) are caused in association with charge and discharge, which have a large impact on the structure of the composite (A) containing the particles (A1), resulting in decrease in the capacity retention rate.
The primary particle diameter may be measured through micrograph observation with a scanning electron microscope (SEM) or a transmission electron microscope (TEM). With respect to the primary particles of the silicon-containing particles obtained by forming a complex, they can be calculated by the image analysis of the spherical particles observed by 100,000-power TEM.
The particles (A1) before forming a composite are generally a mixture of primary particles and aggregates of primary particles (i.e. secondary particles). In some cases, the particles (A1) before forming a composite shows a peak in each of the range from 0.1 μm to 1 μm and the range from 10 μm to 100 μm in a volume-based cumulative particle size distribution obtained by the measurement with no distinction of the primary particles and the secondary particles.
Regarding the amount of the particles (A1), the ratio of the particles (A1) is 2 mass% or more and 40 mass% or less, preferably 5 mass% or more and 35 mass% or less, more preferably 10 mass% or more and 30 mass% or less, still more preferably 12 mass% or more and 28 mass% or less to the total amount of the particles (A1), the particles (A2) and the carbonaceous material (A3). When the content of the particles (A1) is more than 40 mass%, the requirement of the carbonaceous material (A3) increases, which puts a heavy load on the apparatus for manufacturing the composite (A) and makes the production difficult.

(2) Particles (A2)

Since graphite contained in particles (A2) used in an embodiment of the present invention is hard when the graphite has an entangled structure, it is desirable to allow the graphite particles to have a large structure in order to increase the electrode density. It has been long known that, as a structure which is observed in graphite particles, there are a structure which exhibits optical anisotropy by crystal developing and graphite planes arranged, and a structure which exhibits optical isotropy by crystal not developing completely or largely disordered such as hard carbon. With respect to the observation of these structures, a crystallite size can be measured by the X-ray diffraction method and the structures can be observed by a polarizing microscope observation method described in, for example, "Modern Carbon Material Experimental Technology (Analysis part) edited by The Carbon Society of Japan (2001), published by Sipec Corporation, pages 1-8". In the present description, an individual domain in which a color other than black (a color other than the sensitive color when a sensitive color plate is used) can be observed when a sample was observed under a crossed-nicol state of a polarizing microscope is referred to as an optical structure.

Graphite particles contained in the particles (A2) is preferably artificial graphite particles in a preferable embodiment of the present invention. When particles have the optical structure having a size and a shape each within a specific range, and further have an appropriate degree of graphitization, the particles become a material being excellent both in easiness to be collapsed as a material for an electrode and in battery properties.

With respect to the size and shape of the optical structure, the artificial graphite particles preferably satisfy the following formula:

$$1.5 \leq AROP \leq 6.0$$

and

$$0.20 \times Dv50 \leq (SOP \times AROP)^{1/2} < 2.00 \times Dv50$$

By observing optical structures in the cross-section of the resin formed body made of the artificial graphite particles under a polarizing microscope, when areas of the optical structures are accumulated from the smallest structure in an ascending order, SOP represents the area of the optical structure whose accumulated area corresponds to 60% of the total area of all the optical structures. In the same observation, when the structures are counted from a structure of the smallest aspect ratio in an ascending order, AROP represents the aspect ratio of the structure which ranks at the position of 60% in the total number of all the structures.

Dv50 represents a 50% particle diameter in a volume-based cumulative particle size distribution measured by a laser-diffractometry particle size distribution analyzer, and indicates an apparent diameter of the particles. As a laser diffraction type particle size distribution analyzer, for example, Mastersizer (registered trademark) produced by Malvern Instruments Ltd. or the like can be used.

Since the optical structures in the carbon material are cured while flowing, it is often strip-shaped. When the cross-section of the carbon material is observed, the shape of the optical structures is almost rectangular, and it can be assumed that the area of the structure corresponds to the product of the long diameter and the short diameter of the structure. Also, the short diameter is the long diameter/aspect ratio. Assuming that the optical structure as an object to be measured for the area represented by SOP and the optical structure as an object to be measured for the aspect ratio represented by AROP are the same, the long diameter in the optical structure turns to be $(SOP \times AROP)^{1/2}$. That is, $(SOP \times AROP)^{1/2}$ defines the long diameter in an optical structure having a specific size, and based on the ratio of $(SOP \times AROP)^{1/2}$ to the average particle diameter (Dv50), the above-mentioned formula defines that the optical structure is larger than a certain size.

$(SOP \times AROP)^{1/2}$ which defines a long diameter of an optical structure is generally smaller than an average particle diameter, Dv50. However, when the $(SOP \times AROP)^{1/2}$ value is closer to Dv50, it means that the particles in the carbon material consist of a smaller number of optical structures. In a case where $(SOP \times AROP)^{1/2}$ is smaller compared to Dv50, it means that the particles in the carbon material comprise a large number of optical structures. When the $(SOP \times AROP)^{1/2}$ value is 0.20 x Dv50 or more, there are fewer borders of the optical structures, which is preferable for the lithium ion diffusion and enables a high-rate charge and discharge. When the value is larger, the carbon material can retain a larger number of lithium ions. The value is preferably 0.25 x Dv50 or more, more preferably 0.28 x Dv50 or more, and still more preferably 0.35 x Dv50 or more. The upper limit value is less than 2.00 x Dv50 at maximum, preferably 1.00 x Dv50 or less.

A 50% particle diameter in a volume-based cumulative particle size distribution, Dv50, of the artificial graphite particles contained in the particles (A2) in an embodiment of the present invention is preferably 3.0 μm or more and 20.0 μm or less, more preferably 5.0 μm or more and 18.0 μm or less. Pulverizing by special equipment is required to make Dv50 less than 3.0 μm and more energy is required as a result. In addition, it is difficult to handle particles having Dv50 less than 3.0 μm due to aggregation and reduction in the coating processability, and excessive increase in the specific surface area reduces the initial charge-discharge efficiency. On the other hand, if Dv50 exceeds 20.0 μm, it takes a longer time for the lithium diffusion in the negative electrode material and the input-output characteristics is reduced; and it makes it difficult for the silicon-containing particles are uniformly integrated with the surface of the graphite particles, and the cycle characteristics tends to be reduced. That is, by setting Dv50 within the above-mentioned range, it becomes possible to obtain a negative electrode material having good initial charge-discharge efficiency, input-output characteristics and cycle characteristics, with high economic efficiency.

The aspect ratio of the optical structure of the artificial graphite particles contained in the particles (A2), AROP, is preferably 1.5 or more and 6.0 or less, more preferably 2.0 or more and 4.0 or less, still more preferably 2.0 or more and 2.3 or less. An aspect ratio larger than the above lower limit is preferable because it allows the structures to slide over each other and an electrode having a high density can be easily obtained. An aspect ratio smaller than the upper limit is preferable because it requires less energy to synthesize a raw material.

The methods for observation and analysis of the optical structures are as described below.

[Production of polarizing microscope observation sample]

The "cross-section of a carbon material" as used herein is prepared as follows.

A double-stick tape is attached to the bottom of a sample container made of plastic with an internal volume of 30 cm³, and two spatula scoops (about 2 g) of a sample for observation is placed on the double-stick tape. A curing agent (Curing Agent (M-agent) (trade name), produced by Nippon Oil and Fats Co., Ltd., available from Marumoto Struers K.K.) is added to cold embedding resin (Cold embedding resin #105 (trade name), produced by Japan Composite Co., Ltd., available from Marumoto Struers K.K.), and the mixture is kneaded for 30 seconds. The resultant mixture (about 5 ml) is poured slowly to the sample container to a height of about 1 cm and allowed to stand still for 1 day to be coagulated. Next, the coagulated sample is taken out and the double-stick tape is peeled off. Then, a surface to be measured is polished with a polishing machine with a rotary polishing plate.

The polishing is performed so that the polishing surface of the sample is pressed against the rotary surface. The polishing plate is rotated at 1,000 rpm. The polishing is performed successively, using polishing plates having particle sizes (grit numbers) of #500, #1000, and #2000 in this order, and finally, mirror-surface polishing is performed, using alumina (BAIKALOX (registered trademark) type 0.3CR (trade name) with a particle diameter of 0.3 μm, produced by BAIKOWSKI, available from Baikowski Japan).

The polished sample is fixed onto a preparation with clay and observed with a polarizing microscope (BX51, produced by Olympus Corporation).

[Polarizing microscope image analysis method]

The observation was performed at 200-fold magnification. An image observed with the polarizing microscope is photographed by a digital camera (CAMEDIA (registered trademark) C-5050 ZOOM, produced by Olympus Corporation connected to the polarizing microscope through an attachment. The shutter time is 1.6 seconds. Among the photographed data, images with 1,200×1,600 pixels were used as an analysis object. It corresponds to a microscope field of 480 μm x 640 μm. It is desirable to use larger number of images for the analysis and measurement error can be reduced by analyzing 40 images or more. The image analysis was performed using ImageJ (produced by National Institutes of Health) to discriminate blue portions, yellow portions, magenta portions and black portions.

The parameters defining each color when ImageJ was used are given below.

Table 1

|  | Hue value | Saturation value | Brightness value |
| --- | --- | --- | --- |
| Blue | 150 to 190 | 0 to 255 | 80 to 255 |
| Yellow | 235 to 255 | 0 to 255 | 80 to 255 |
| Magenta | 193 to 255 | 180 to 255 | 120 to 255 |

(continued)

|  | Hue value | Saturation value | Brightness value |
|---|---|---|---|
| Black | 0 to 255 | 0 to 255 | 0 to 120 |

The statistical processing with respect to the detected optical structures is performed using an external macrofile. The black portions, that is, portions corresponding not to optical structures but to resin are excluded from the analysis, and the area and aspect ratio of each of blue, yellow and magenta optical structures are to be calculated.

The artificial graphite particles contained in the particles (A2) in an embodiment of the present invention preferably comprise carbon particles that are not flaky. This is to prevent the orientation of the carbon network layer at the time of producing an electrode using the negative electrode material. Orientation is used as an index of the degree of flakiness. That is, in the artificial graphite particles in an embodiment of the present invention, $I_{110}/I_{004}$ as being the ratio between the peak intensity $I_{110}$ of plane (110) and the peak intensity $I_{004}$ of plane (004) of a graphite crystal in the diffraction peak profile determined by the powder XRD measurement is preferably 0.10 or more and 0.35 or less. The ratio is more preferably 0.18 or more and 0.30 or less, still more preferably 0.21 or more and 0.30 or less. In the artificial graphite particles having an $I_{110}/I_{004}$ value of 0.10 or more, the orientation is not too high. Such graphite particles do not cause the electrode expansion in a direction vertical to the current collector plane in the electrode due to expansion and contraction in association with intercalation and deintercalation (occlusion and release) of lithium ions in Si and graphite in the negative electrode material, and a good cycle life can be attained. In addition, the carbon network layer does not become parallel to the electrode plate, which makes the Li ion insertion easy to proceed and leads to the good rapid charge-discharge characteristics. When artificial graphite particles have an $I_{110}/I_{004}$ value of 0.35 or less, the orientation of the particles is not too low, and the electrode density becomes easy to increase at the time of pressing during the production of an electrode using the negative electrode material.

In addition, when the carbon particles are flaky, it becomes difficult to handle them due to the decrease in the bulk density. They have low affinity for a solvent when they are made into slurry for producing an electrode, which leads to a reduced peeling strength of the electrode in some cases.

The orientation of particles is also related to the above mentioned optical structures.

The artificial graphite particles contained in the particles (A2) in an embodiment of the present invention have an average circularity of preferably 0.80 to 0.95. As described above, an average circularity is lowered in the case of flaky particles and the case of particles having irregular shapes. In the case of flaky particles, they make an electrode using the negative electrode material easier to expand, and the cycle life and rapid charge-discharge characteristics are degraded. In the case of particles having irregular shapes, the electrode density is difficult to increase at the time of producing an electrode due to the increased gap between the particles. On the other hand, if the average circularity is too high, the contact area between the particles becomes smaller at the time of producing an electrode, which leads to high resistance and degradation of input-output characteristics. The average circularity is preferably 0.83 to 0.93, more preferably 0.85 to 0.90.

The average circularity is calculated from the frequency distribution of the circularity obtained from the analysis of 10,000 particles or more in the LPF mode by using FPIA-3000 manufactured by Sysmex Corporation. Here, circularity is a value obtained by dividing the circumferential length of a circle having the same area with that of the observed particle image by the circumferential length of the particle image, and the particle image is closer to a true circle when its circularity is closer to 1. When S represents the area and L represents the circumferential of the particle image, circularity is represented by the following formula.

$$\text{Circularity} = (4\Pi S)^{1/2}/L$$

The artificial graphite particles contained in the particles (A2) in an embodiment of the present invention has an average interplanar spacing (002) plane by the X-ray diffraction method, $d_{002}$, of preferably 0.3360 nm or less. This increases the amount of lithium ions to be intercalated and desorbed per mass of the artificial graphite particles in the negative electrode material; i.e. increases the weight energy density of the negative electrode material as well. Further, this suppresses electrode expansion and contraction in association with intercalation and deintercalation (occlusion and release) of lithium ions in Si in the negative electrode material, and the cycle life is improved.

A thickness of the crystal in the C-axis direction, Lc, is preferably 50 to 1,000 nm from the viewpoint of the weight energy density and easiness to be collapsed.

In the present description, $d_{002}$ and Lc can be measured using a powder X-ray diffraction (XRD) method by a known method (see I. Noda and M. Inagaki, Japan Society for the Promotion of Science, 117th Committee material, 117-71-A-1 (1963), M. Inagaki et al., Japan Society for the Promotion of Science, 117th committee material, 117-121-C-5 (1972), M. Inagaki, "carbon", 1963, No. 36, pages 25-34).

In an embodiment of the present invention, the BET specific surface area of the graphite particles contained in the particles (A2) is preferably 1.0 m$^2$/g or more and 10.0 m$^2$/g or less, more preferably 3.0 m$^2$/g or more and 7.5 m$^2$/g or less. When the BET specific surface area of the graphite particles is less than 1.0 m$^2$/g, it is difficult for the particles (A1) and the carbonaceous material (A3) to be integrated with the graphite particles, and improvement of the cycle life is not sufficient. When the BET specific surface area of the graphite particles exceeds 10.0 m$^2$/g, it increases the BET specific surface area of the negative electrode material, resulting in irreversible side reactions on the surface of the active material and excessive use of a binder. By setting the BET specific surface area of the graphite particles to be within the above-mentioned range, irreversible side reactions in the negative electrode material can be suppressed, and a large area to be contacted with an electrolyte can be secured. As a result, the input-output characteristics can be improved.

The BET specific surface area is measured by a common method of measuring the absorption and desorption amount of gas per mass. As a measuring device, for example, a surface area and pore size analyzer (NOVA 4200e manufactured by Quantachrome Instruments) can be used.

In the artificial graphite particles contained in the particles (A2) in an embodiment of the present invention, the total pore volume of the pores having a diameter of 0.4 μm or less measured by the nitrogen gas adsorption method with liquid nitrogen cooling is preferably 5.0 μl/g to 40.0 μl/g, more preferably 25.0 μl/g to 40.0 μl/g. Pores are generated and enlarged by undergoing a moderate oxidation, and thus artificial graphite particles having a total pore volume within the above-described range can be produced. When the total pore volume is 5.0 μl/g or more, it makes the particles (A1) and the carbonaceous material (A3) easier to be integrated with the artificial graphite particles, which is preferable from the viewpoint of improvement of the cycle life. When the total pore volume is 40.0 μl/g or less in a carbon material having an Lc value of 100 nm or more measured by the X-ray diffraction method, irreversible change of the structure due to the anisotropic expansion and contraction in the graphite layer at the time of charging and discharging is less likely to occur, which further improves cycle characteristics of the negative electrode material. When the total pore volume of the artificial graphite particles is within the range, the electrolytic solution is allowed to impregnate easily at the time of using the negative electrode material thereof as an active material, which is preferable from the viewpoint of the rapid charge-discharge characteristics.

The artificial graphite particles contained in the particles (A2) in an embodiment of the present invention has an R value ($I_D/I_G$) of preferably 0.04 or more and 0.18 or less, more preferably 0.08 or more and 0.16 or less, which value is the ratio between the peak intensity $I_D$ of a peak within the range of 1300 to 1400 cm$^{-1}$ derived from an amorphous component and the peak intensity $I_G$ of a peak within the range of 1580 to 1620 cm$^{-1}$ derived from a graphite component measured by Raman spectroscopy spectra. When the R value is 0.04 or more, the graphite crystallinity is not too high and a good rapid charge-discharge property can be achieved. When the R value is 0.18 or less, side reaction, which is more likely to occur due to the presence of defects, does not occur and good cycle characteristics can be achieved.

The Raman spectrum can be measured, for example, using a laser Raman spectrophotometer (NRS-5100 produced by JASCO Corporation), by observing under the attached microscope.

(3) Method for producing particles (A2)

The graphite particles contained in the particles (A2) in an embodiment of the present invention can be produced by heating the particles of pulverized coke having a thermal history of 1,000°C or less.

As a raw material of coke, for example, petroleum pitch, coal pitch, coal pitch coke, petroleum coke and the mixture thereof can be used. That is, it is preferable to use a substance derived from petroleum-based coke and/or coal-based coke for the graphite particles contained in the particles (A2). Among these, preferred is the coke obtained by a delayed coking process under specific conditions.

Examples of raw materials to pass through a delayed coker include decant oil which is obtained by removing a solvent after the process of fluid catalytic cracking to heavy distillate at the time of crude refining, and tar obtained by distilling coal tar extracted from bituminous coal and the like at a temperature of 200°C or more and heating it to 100°C or more to impart sufficient flowability. These liquids are heated to preferably 450°C or more, more preferably 500°C, or still more preferably 510°C or more, during the delayed coking process, at least at an inlet of the coking drum in order to increase the residual carbon ratio in the subsequent processes, resulting in improvement in the yield. Also, pressure inside the drum is kept at preferably an ordinary pressure or higher, more preferably 300 kPa or higher, still more preferably 400 kPa or higher to increase the capacity of a negative electrode. As described above, by performing coking under more severe conditions than usual, the reaction of the liquids is further enhanced and coke having a higher degree of polymerization can be obtained.

The obtained coke is to be cut out from the drum by water jetting, and roughly pulverized to lumps about the size of 5 centimeters with a hammer and the like. A double roll crusher and a jaw crusher can be used for the rough pulverization, and it is desirable to pulverize the coke so that the particles larger than 1 mm in size account for 90 mass% or more of the powder. If the coke is pulverized too much to generate a large amount of fine powder having a diameter of 1 mm or less, problems such as the coke dust stirred up after drying and the increase in burnouts may arise in the subsequent processes such as heating.

It is desirable that the area and aspect ratio of a specific optical structure of the coke are within a specific range. The area and aspect ratio of an optical structure can be calculated by the above-mentioned method. Also, when the calcined coke is obtained as a lump of a few centimeters in size, the lump as obtained is embedded in resin and subjected to mirror-like finishing and the like, and the cross-section is observed by a polarizing microscope to calculate the area and aspect ratio of an optical structure.

In the case where the optical structures are observed in a rectangular field of 480 $\mu$m x 640 $\mu$m in the cross-section of a formed body of coke under a polarizing microscope, when areas of the optical structures are accumulated from the smallest structure in an ascending order, an area of an optical structure whose accumulated area corresponds to 60% of the total area of all the optical structures is preferably 50 $\mu$m$^2$ or more and 5,000 $\mu$m$^2$ or less, more preferably 100 $\mu$m$^2$ or more and 3,000 $\mu$m$^2$ or less, and most preferably 100 $\mu$m$^2$ or more and 1,600 $\mu$m$^2$ or less. When the coke having the area of an optical structure within the above-mentioned range is pulverized and graphitized, a carbon material having the optical structures as described above can be obtained. Since such a carbon material is going to have a fully developed crystal structure, it can retain lithium ions at a higher density. Also, as the crystals develop in a more aligned state in the carbon material, when an electrode is pressed, crystal planes slide over each other by fracture along the crystal plane and the carbon material has a higher degree of freedom for the particle shape, which improves filling property and is preferable.

In the case where the optical structure of the coke is observed in the same way as described above, when the optical structures are counted from a structure of the smallest aspect ratio in an ascending order, the aspect ratio of the structure which ranks at the position of 60% in the total number of all the structures is preferably 1.5 or more and 6 or less, more preferably 2.0 or more and 3.0 or less, and most preferably 2.3 or more and 2.6 or less.

Next, the coke is to be pulverized.

In the case of pulverizing coke by a dry method, grindability is significantly reduced if water is contained in coke at the time of pulverization. Therefore, it is desirable to dry coke at around 100 to 1,000°C, preferably at 100 to 500°C. If coke has high-temperature thermal history, coke has a higher crushing strength, which reduces grindability. In addition, coke having high-temperature thermal history has developed anisotropy in crystals and higher cleavability, and the coke tends to be a flaky powder. There is not particular limit to the method of pulverization, and pulverization can be performed using a known jet mill, hammer mill, roller mill, pin mill, vibration mill or the like.

It is desirable to perform pulverization so that coke powder has a Dv50 value of from 3.0 $\mu$m or more and 20.0 $\mu$m or less. More preferably, pulverization is performed so that coke powder has a Dv50 value of from 5.0 $\mu$m or more and 18.0 $\mu$m or less.

Graphitization is performed at a temperature of 2,400°C or higher, more preferably 2,800°C or higher, and still more preferably 3,050°C or higher, and the most preferably 3,150°C or higher. The treatment at a higher temperature further promotes the development of the graphite crystals and an electrode having a higher storage capacity of lithium ion can be obtained. On the other hand, if the temperature is too high, it is difficult to prevent the sublimation of the graphite powder and an unnecessarily large amount of energy is required. Therefore, the graphitization is preferably 3,600°C or lower.

It is desirable to use electric energy to attain the above temperature. Electric energy is more expensive than other heat source and in particular to attain a temperature of 2,000°C or higher, an extremely large amount of electricity is consumed. Therefore, it is preferable not to consume the electric energy except for graphitization, and to calcine the carbon material prior to the graphitization to remove the organic volatile content: i.e. to make the fixed carbon content be 95% or more, preferably 98% or more, and still more preferably 99% or more. The calcination can be performed by, for example, heating the carbon material at 700 to 1,500°C. Since decrease in mass at the time of graphitization can be reduced by the calcination, a treatment amount at one time of the graphitization treatment apparatus can be increased.

It is preferable that the material is not subjected to pulverizing treatment after graphitization. Note that the material may be de-agglomerated after the graphitization to such a degree that the particles are not pulverized.

When an electrode is manufactured by employing the graphite particles as an active material, the active material can be uniformly distributed inside the electrode and the contact between the adjacent particles is stabilized at the time of compressing the electrode. As a result, it is possible to produce a battery suitable for the repeated charging and discharging.

(4) Carbonaceous material (A3)

The carbonaceous material (A3) in a preferable embodiment of the present invention is different from the particles (A2). The carbonaceous material (A3) is a carbon material, in which the crystals formed from carbon atoms have low degree of crystallinity, has a peak in the vicinity of 1360 cm$^{-1}$ measured in a Raman scattering spectrum.

A carbonaceous material (A3) can be produced by, for example, carbonizing a carbon precursor. There is no particular limit on the carbon precursor, and preferred are a petroleum-derived substance such as thermal heavy oil, thermally cracked oil, straight asphalt, blown asphalt, and tar or a petroleum pitch obtained as a by-product in producing ethylene; and a coal-derived substance such as coal tar produced in coal carbonization, a heavy component obtained by removing a low-boiling-point component from coal tar by distillation, and coal-tar pitch (coal pitch). Petroleum-based pitch or coal-based pitch is particularly preferable. Pitch is a mixture of multiple polycyclic aromatic compounds. By use of pitch, a carbonaceous material (A3) having a small amount of impurities can be produced at a high carbon yield. Since pitch contains less oxygen, the particles (A1) are less likely to be oxidized when they are coated with a carbonaceous material (A3) .

The softening point of the pitch as a precursor of a carbonaceous material (A3) is preferably 80°C or more and 300°C or less. When the softening point of the pitch is too low, the average molecular weight of the polycyclic aromatic compounds constituting the pitch is low and the pitch contains a volatile component in a large amount, resulting in a low carbonization yield and an increase in production cost. Besides, such pitch offers a carbonaceous material (A3) having many pores and a large specific surface area. Pitch having too high a softening point has a high viscosity, and hence it tends to be difficult to uniformly disperse the particles (A1). The softening point of the pitch may be measured by a Mettler method described in ASTM-D3104-77.

The residual carbon ratio of the pitch as a precursor of a carbonaceous material (A3) is preferably 20 mass% or more and 70 mass% or less, more preferably 25 mass% or more and 60 mass% or less. When the residual carbon ratio is low, the production cost tends to be increased. Besides, such pitch offers a carbonaceous material having a large specific surface area. Pitch having a high residual carbon ratio generally has a high viscosity, and hence it tends to be difficult to be uniformly mixed with the particles (A1).

The residual carbon ratio is determined by a method as described below. After pulverization of the pitch in a solid form with a mortar or the like, the pulverized product is subjected to thermal analysis under a nitrogen gas flow. The residual carbon ratio is defined as a ratio of a residual amount at 1,100°C with respect to a loaded amount. The residual carbon ratio is identical to a fixed carbon content in JIS K2425 measured at a carbonization temperature of 1,100°C.

The QI (quinolone insoluble) content in the pitch as a precursor of the carbonaceous material (A3) is preferably 10 mass% or less, more preferably 5 mass% or less, and still more preferably 2 mass% or less. The QI content of the pitch is a value corresponding to its free carbon amount. When pitch containing a large amount of free carbon is subjected to heat treatment, the free carbon adheres onto the surfaces of mesophase spheres in the course of appearance of the mesophase spheres, to form a three-dimension network and thus prevent the growth of the spheres. Thus, a mosaic structure is likely to be formed. In contrast, when pitch containing a small amount of free carbon is subjected to the heat treatment, the mesophase spheres grow larger to form needle coke. When the QI content falls within the above-mentioned range, electrode characteristics are more satisfactory.

The TI (toluene insoluble) content in the pitch as a precursor of the carbonaceous material (A3) is preferably 10 mass% or less, more preferably 70 mass% or less. In a pitch having a small TI content, the average molecular weight of the polycyclic aromatic compounds constituting the pitch is low and the pitch contains the volatile component in a large amount, resulting in a low carbonization yield and an increase in production cost. Besides, such pitch offers a carbonaceous material containing many pores and having a large specific surface area. A pitch having a large TI content has an advantage of a high carbonization yield by virtue of a high average molecular weight of the polycyclic aromatic compounds constituting the pitch, but in general, pitch having a large TI content has a high viscosity, and hence it tends to be difficult to be uniformly mixed with the particles (A1). When the TI content falls within the above-mentioned range, pitch and the other components can be uniformly mixed, and a negative electrode material exhibiting suitable characteristics as the active material for a battery can be obtained.

The QI content and TI content of the pitch may be measured by a method disclosed in JIS K2425 or a method in conformity thereto.

The amount of the carbonaceous material (A3) is preferably 2 mass% or more and 40 mass% or less, more preferably 4 mass% or more and 30 mass% or less with respect to the total of the above-mentioned particles (A1), particles (A2) and carbonaceous material (A3).

When the amount of the carbonaceous material (A3) is 2 mass% or more, the particles (A1) and the particles (A2) are to be fully bonded. In addition, since the surface of the particles (A1) can be coated with the carbonaceous material (A3), it will make it easy to impart conductivity to the particles (A1). It also makes an effect of suppressing the surface reactivity of the particles (A1) and an effect of reducing the expansion and contraction of the particles (A1), resulting in good cycle characteristics. On the other hand, when the carbonaceous material amount is 40 mass% or less, the initial efficiency is not to be reduced even if the carbonaceous material (A3) accounts for a large percentage.

(5) Composite (A)

It is desirable that the composite (A) in an embodiment of the present invention comprises particles (A1), particles (A2) and a carbonaceous material (A3); and the particles (A1), the particles (A2) and the carbonaceous material (A3) are integrated with each other at least partially to thereby form composite particles. Integration includes, for example, a state in which the particles (A1) and the particles (A2) are fixed by the carbonaceous material (A3) to be bonded; and a state in which the particles (A1) and/or the particles (A2) are coated with the carbonaceous material (A3). In the present invention, it is desirable that the particles (A1) are completely coated with the carbonaceous material (A3) in such a state that the surface of the particles (A1) is not exposed. Above all, preferred are a state in which the particles (A1) and the particles (A2) are bonded with each other through the carbonaceous material (A3), and the whole joined particles are coated by the carbonaceous material (A3) to form composite particles; and a state in which the particles (A1) are in direct contact with the particles (A2), and the whole particles are coated by the carbonaceous material (A3) to form composite particles. By preventing the surface of the particles (A1) from being exposed when they are used as a negative electrode material in a battery, the electrolyte decomposition reaction can be suppressed to thereby maintain the coulomb efficiency high. In addition, by joining the particles (A2) and the particles (A1) through the carbonaceous material (A3), the conductivity therebetween can be increased. Furthermore, by making the particles (A1) to be coated with the carbonaceous material (A3), the volume strain in association with expansion and contraction of the silicon-containing particles can be eased.

In the composite (A) in an embodiment of the present invention, the particles (A2), the carbonaceous material (A3), or the particles (A1), which are not integrated, may be singly contained. It would be better that the particles (A2), the carbonaceous material (A3), or the particles (A1), which are not integrated, are contained in the composite in a smaller amount. Specifically, the amount is preferably 10 mass% or less with respect to the mass of the composite (A).

In the composite (A) in an embodiment of the present invention, Dv50 is preferably 3.0 $\mu$m or more and 20.0 $\mu$m or less, more preferably 5.0 $\mu$m or more and 18.0 $\mu$m or less. When Dv50 is less than 3.0 $\mu$m, the production of the composite (A) will be economically less sufficient. In addition, it is difficult to handle the composite due to reduction in the coating processability, which may require a binder in a larger amount or make it difficult to increase the electrode density. Dv50 of less than 3.0 $\mu$m will result in an excessively large specific surface area, and the initial charge-discharge efficiency will be reduced due to side reaction with an electrolyte. On the other hand, if the Dv50 value exceeds 20.0 $\mu$m, the input-output characteristics is reduced; the distribution uniformity in an electrode is reduced; or the cycle characteristics is reduced. That is, by setting Dv50 within the above-mentioned range, it becomes possible to obtain a composite having good initial charge-discharge efficiency, input-output characteristics and cycle characteristics, with high economic efficiency.

In the composite (A) in an embodiment of the present invention, BET specific surface area is preferably 1.0 $m^2$/g or more and 10.0 $m^2$/g or less, more preferably 1.0 $m^2$/g or more and 5.0 $m^2$/g or less. When the BET specific surface area is 1.0 $m^2$/g or more, the input-output characteristics is not to be reduced, the distribution uniformity in the electrode can be maintained, and good cycle characteristics can be obtained. When the BET specific surface area is 10.0 $m^2$/g or less, the coating processability is not to be reduced and there is no problem in handling the composite. A binder is not required in a larger amount in the production of an electrode, it is easy to increase the electrode density, and the initial charge-discharge efficiency is not to be reduced due to side reaction with an electrolyte. It should be noted that if the surface of the particles (A1) is exposed due to excessive pulverization of the composite, it will decrease an effect of inhibiting the surface activity and an effect of relieving of the expansion and contraction of the particles (A1), and the cycle characteristics shows a tendency to decrease.

In the composite (A) in an embodiment of the present invention, an R value ($I_D/I_G$) is preferably 0.15 or more and 1.0 or less, more preferably 0.2 or more and 1.0 or less, still more preferably 0.4 or more and 1.0 or less, which value is the ratio between the peak intensity $I_D$ of a peak within the range of 1300 to 1400 $cm^{-1}$ and the peak intensity $I_G$ of a peak within the range of 1580 to 1620 $cm^{-1}$ measured by Raman spectroscopy spectra of the particle edge surface by using a Raman microscope. An excessively low R value means that a certain part of the surface of the particles (A2) is exposed. Therefore, when the R value is 0.15 or more, the particles (A2) and the particles (A1) are covered by the carbonaceous material (A3), which improves an effect of inhibiting the surface activity and relieving expansion and contraction of the particles (A1), resulting in good cycle characteristics. On the other hand, an excessively high R value means that the carbonaceous material (A3) that contains amorphous carbon having a large initial irreversible capacity in a large amount covers the surface of the particles (A2). Accordingly, when the R value is 1.0 or less, the decrease in the initial discharge efficiency can be suppressed.

(6) Method of producing composite (A)

The composite (A) in an embodiment of the present invention can be manufactured according to a known method.

For example, the composite (A) can be obtained by a method of mixing particles (A1), particles (A2) and a precursor of the carbonaceous material (A3) and by subjecting the obtained mixture to heat treatment to thereby change the precursor to a carbonaceous material (A3).

The mixture of particles (A1), particles (A2) and a carbonaceous material (A3) can be obtained by, for example, melting pitch as being one of the precursors of a carbonaceous material (A3), mixing the molten pitch with particles (A1) in an inert atmosphere, solidifying the mixture followed by pulverization, and by mixing the pulverized product with particles (A2); by mixing particles (A1) and particles (A2), and then mixing the mixture of the particles (A1) and the particles (A2) with a precursor of the carbonaceous material (A3), and conducting mechanochemical treatment; or by dissolving a precursor of the carbonaceous material (A3) in a solvent, adding particles (A1) and particles (A2) thereto to be mixed in a liquid phase, and pulverizing the solid body obtained by removing the solvent. For the mechanochemical treatment, a known device such as Hybridizer (trademark; manufactured by Nara Machinery Co., Ltd.) can be used.

A known device such as a ball mill, jet mill, rod mill, pin mill, rotary cutter mill, hammer mill, atomizer and mortar can be used for pulverization and mixing. It is desirable to employ a method that can prevent the increase in the oxidation degree of the particles (A1). Generally, it is thought that the oxidation is facilitated in particles with a small diameter that have a large specific surface area. Therefore, preferred is a device that pulverizes particles with a large diameter preferentially, and will not make much progress in pulverization of particles with a small diameter. For example, by use of a device that performs pulverization mainly by impact such as a rod mill and a hammer mill, the impact force tends to be transmitted preferentially to particles with a large diameter, and less impact is to be delivered to particles with a small diameter. By use of a device that performs pulverization mainly by impact and shear such as a pin mill and a rotary cutter mill, the shear force tends to be transmitted preferentially to particles with a large diameter, and less shear is to be delivered to particles with a small diameter. Pulverization and mixing can be conducted without the progress in the oxidization of the particles (A1) by using such a device.

To inhibit the progress of the oxidation of the particles (A1), it is desirable to perform pulverization and mixing in a non-acidic atmosphere. Examples of the non-acidic atmosphere include an atmosphere filled with an inert gas such as an argon gas and a nitrogen gas.

The heat treatment to convert a carbon precursor of a carbonaceous material (A3) to a carbonaceous material (A3) is performed at a temperature of preferably 200°C or more and 2000°C or less, more preferably 500°C or more and 1500°C or less, particularly preferably 600°C or more and 1200°C or less. By the heat treatment, a carbonaceous material (A3) can cover particles (A1) and/or particles (A2) to give a form in which a carbonaceous material (A3) enters between the particles (A1), between the particles (A2), or between the particles (A1) and the particles (A2) to thereby join the particles. When the heat treatment temperature is too low, the carbonization of a carbon precursor of the carbonaceous material (A3) will not be fully completed. As a result, hydrogen and oxygen remain in the negative electrode material, and may adversely affect the battery characteristics. On the other hand, when the heat treatment temperature is too high, it will promote the crystallization excessively to thereby reduce the charging characteristics, or the elements constituting the particles (A1) and carbon are bonded to each other to thereby generate an inactive state against Li ions in some cases. The heat treatment is preferably conducted under a non-acidic atmosphere. Examples of the non-acidic atmosphere include an atmosphere filled with an inert gas such as an argon gas and a nitrogen gas. Particles are aggregated due to fusion by the heat treatment in some cases, it is desirable to crash the product subjected to heat treatment to be used as an electrode active material. As a crashing method, preferred is a pulverizer using an impact force such as a hammer, and a jet mill using the impact between the crashed products.

(7) Graphite-containing substance (B)

The graphite-containing substance (B) in an embodiment of the present invention is morphologically identical to particles (A2) except for Dv50.

Dv50 of the graphite-containing substance (B) is 5.0 $\mu$m or more and 20.0 $\mu$m or less, preferably 8.0 $\mu$m or more and 18.0 $\mu$m or less. Dv50 of the graphite-containing substance (B) may be the same with or different from that of the composite (A) .

When the graphite-containing substance (B) satisfies the above-mentioned embodiment, the electric resistance decreases. This is because the graphite-containing substance (B) has better electron/ion conductivity than the particles (A1) and the carbonaceous material (A3) constituting the composite (A). When Dv50 of the graphite-containing substance (B) is less than 5.0 $\mu$m, pulverizing by special equipment is required and more energy is required. In addition, it is difficult to handle particles having Dv50 less than 5.0 $\mu$m due to aggregation and reduction in the coating processability, and excessive increase in the specific surface area reduces the initial charge-discharge efficiency. On the other hand, if Dv50 of the graphite-containing substance (B) exceeds 20.0 $\mu$m, it takes a longer time for the lithium diffusion in the graphite-containing substance (B) and the input-output characteristics is reduced.

Even when the graphite-containing substance (B) and the composite (A) have exactly the same particle diameter, an electron-conducting path by the graphite-containing substance (B) is formed.

The conditions on the size and the shape of optical structures, the $I_{100}/I_{004}$ value as an index of the degree of flakiness, the average circularity, the average interplanar spacing d002 of (002) plane, the thickness of the crystal in the C-axis direction, Lc, the BET specific surface area, the total pore volume, and $I_D/I_G$ by Raman spectroscopy spectra (R value) of the graphite-containing substance (B) fall within the same range of those of the above-mentioned particles (A2).

The production method of the graphite-containing substance (B) is the same with that of the particles (A2) except for the target value of Dv50 in the pulverization process.

(8) Graphite-containing substance (C)

The graphite-containing substance (C) in an embodiment of the present invention is morphologically identical to particles (A2) and the graphite-containing substance (B) except for Dv50.

Dv50 of the graphite-containing substance (C) is 1.0 $\mu$m or more and 10.0 $\mu$m or less, preferably 3.0 $\mu$m or more and 9.0 $\mu$m or less. Dv50 of the graphite-containing substance (B) is preferably larger by 4.0 $\mu$m or more, preferably by 5.0 $\mu$m or more than that of the graphite-containing substance (C).

When the graphite-containing substance (C) satisfies the above-mentioned embodiment, the graphite-containing substance (C) enters between the particles of the composite (A) and the graphite-containing substance (B) and between the particles of the graphite-containing substance (B), and the electrode density increases compared to the electrode comprising the composite (A) and the graphite-containing substance (B) only. Along with it, the electron-conducting paths increase compared to the electrode comprising the composite (A) and the graphite-containing substance (B) only, resulting in decrease in resistance.

In the negative electrode material in an embodiment of the present invention, the amount of the composite (A) is 4 mass% or more and 85 mass% or less, preferably 4 mass% or more and 80 mass% or less with respect to the total of the composite (A), the graphite-containing substance (B) and the graphite-containing substance (C). When the amount of the composite (A) is less than 4 mass%, the capacity of the electrode as a whole decreases and the introduction of the composite (A) intended to increase the capacity becomes meaningless. On the other hand, when the amount of the composite (A) is larger than 85 mass%, the electron-conducting paths by the graphite-containing substances (B) and (C) are not sufficiently secured and there is little effect of decreasing resistance.

The mass ratio of the graphite-containing substance (B) to the graphite-containing substance (C) ((B)/(C)) is preferably 0.1 or more and 9.0 or less, more preferably 0.7 or more and 1.5 or less, still more preferably 0.8 or more and 1.2 or less. When the mass ratio of the graphite-containing substance (B) to the graphite-containing substance (C) is 0.1 or more, the rise in side reactions due to the increase in the specific surface area can be suppressed. On the other hand, when the mass ratio of the graphite-containing substance (B) to the graphite-containing substance (C) is 9.0 or less, decrease in the electrode density due to the voids generated in the electrode layer can be suppressed.

The conditions on the size and the shape of optical structures, the $I_{100}/I_{004}$ value as an index of the degree of flakiness, the average circularity, the average interplanar spacing d002 of (002) plane, the thickness of the crystal in the C-axis direction, Lc, the BET specific surface area, the total pore volume, and $I_D/I_G$ by Raman spectroscopy spectra (R value) of the graphite-containing substance (C) fall within the same range of those of the above-mentioned particles (A2).

The production method of the graphite-containing substance (C) is the same with that of the particles (A2) except for the target value of Dv50 in the pulverization process.

(9) Paste for negative electrode

A paste for a negative electrode according to one embodiment of the present invention contains the negative electrode material, a binder, and a solvent, and as an optional ingredient, a conductive assistant or the like. The paste for a negative electrode is obtained by, for example, mixing and kneading the negative electrode material, the binder, and the solvent, and as an optional ingredient, the conductive assistant or the like. The paste for a negative electrode may be formed into a sheet shape, a pellet shape, or the like.

A binder is not particularly limited and examples thereof include polyethylene, polypropylene, an ethylene propylene terpolymer, butadiene rubber, styrene butadiene rubber, butyl rubber, acrylic rubber, a polymer compound having a large ionic conductivity, and the like. Examples of the polymer compound having a large ionic conductivity include polyvinylidene fluoride, polyethylene oxide, polyepichlorohydrin, polyphosphazene, polyacrylonitrile, and the like. The amount of the binder is preferably 0.5 part by mass or more and 100 parts by mass or less with respect to 100 parts by mass of the negative electrode material.

The conductive assistant is not particularly limited as long as the conductive assistant plays a role in imparting conductivity and electrode stability (buffering action on a volume change through intercalation and deintercalation of lithium ions) to the electrode. Examples thereof include carbon nanotubes, carbon nanofiber, vapor grown carbon fibers (e.g., "VGCF (trademark)" manufactured by Showa Denko K.K.), conductive carbon (e.g., "DENKA BLACK (trademark)" manufactured by Denki Kagaku Kogyo Kabushiki Kaisha, "Super C65" manufactured by TIMCAL, "Super C45" manufactured by TIMCAL, or "KS6L" manufactured by TIMCAL), and the like. The amount of the conductive assistant is preferably 10 parts by mass or more and 100 parts by mass or less with respect to 100 parts by mass of the negative electrode material.

The solvent is not particularly limited, and examples thereof include N-methyl-2-pyrrolidone, dimethylformamide, isopropanol, water, and the like. In the case of a binder using water as a solvent, a thickening agent is preferably used in combination. The amount of the solvent is adjusted so that the paste achieves such viscosity that the paste is easily applied onto a current collector.

(10) Negative Electrode Sheet

A negative electrode sheet according to one embodiment of the present invention includes a current collector and an electrode layer coating the current collector.

Examples of the current collector include a nickel foil, a copper foil, a nickel mesh, a copper mesh, and the like.

The electrode layer contains a binder and the negative electrode material. The electrode layer may be obtained by, for example, applying the paste, followed by drying. A method of applying the paste is not particularly limited. The thickness of the electrode layer is generally from 50 $\mu$m to 200 $\mu$m. When the thickness of the electrode layer is too large, the negative electrode sheet cannot be accommodated in a standardized battery container in some cases. The thickness of the electrode layer may be adjusted by the application amount of the paste. In addition, the thickness may also be adjusted by performing pressure forming after drying the paste. As a method for the pressure forming, there is given a forming method, such as roll pressing or plate pressing, and the like. A pressure during the pressure forming is preferably from about 100 MPa to about 500 MPa.

The electrode density of the negative electrode sheet may be calculated as described below. Specifically, the negative electrode sheet after the press forming is punched into a circular shape having a diameter of 16 mm, and its mass and thickness are measured. The mass and thickness of the electrode layer can be understood by subtracting therefrom the mass and thickness of a current collector foil (punched out into a circular shape having a diameter of 16 mm) separately measured, and the electrode density is calculated based on the obtained values.

(11) Lithium Ion Secondary Battery

A lithium ion secondary battery according to one embodiment of the present invention includes at least one selected from the group consisting of a non-aqueous electrolytic solution and a non-aqueous polymer electrolyte, a positive electrode sheet, and the negative electrode sheet.

As the positive electrode sheet, a positive electrode sheet which has hitherto been used for a lithium ion secondary battery, specifically, a sheet including a positive electrode active material may be used. Examples of the positive electrode active material include $LiNiO_2$, $LiCoO_2$, $LiMn_2O_4$, $LiNi_{0.34}Mn_{0.33}Co_{0.33}O_2$, and $LiFePO_4$.

The non-aqueous electrolytic solution and the non-aqueous polymer electrolyte used for the lithium ion secondary battery are not particularly limited. Examples thereof include: organic electrolytic solutions each obtained by dissolving a lithium salt, such as $LiClO_4$, $LiPF_6$, $LiAsF_6$, $LiBF_4$, $LiSO_3CF_3$, $CH_3SO_3Li$, or $CF_3SO_3Li$, into a non-aqueous solvent, such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, or $\gamma$-butyrolactone; gel polymer electrolytes each containing polyethylene oxide, polyacrylonitrile, polyvinylidene fluoride, polymethyl methacrylate, or the like; and a solid polymer electrolyte containing, for example, a polymer having an ethylene oxide bond.

In addition, a substance for causing a decomposition reaction in initial charging of the lithium ion secondary battery may be added in a small amount to the electrolytic solution. Examples of the substance include vinylene carbonate (VC), biphenyl, propanesultone (PS), fluoroethylene carbonate (FEC), and ethylene sultone (ES). The addition amount thereof is preferably 0.01 mass% or more and 50 mass% or less.

In the lithium ion secondary battery of the present invention, a separator may be arranged between the positive electrode sheet and the negative electrode sheet. Examples of the separator include non-woven fabric, cloth, and a microporous film each containing as a main component a polyolefin, such as polyethylene or polypropylene, and a combination thereof.

The lithium ion secondary battery of the present invention can be used as a power source of electronic devices such as mobile phones, mobile personal computers, and Personal Digital Assistant (PDA); a power source of electric devices such as an electric drill, a vacuum cleaner, and an electric vehicle; and used for storage of power obtained by fuel cells, photovoltaic generation, and wind generation.

Examples

Hereinafter, the present invention is described in more detail by way of typical examples. It should be noted that these examples are merely for illustrative purposes, and the present invention is not limited thereto.

Materials used in the examples to be described later are given below.

(1) Silicon-containing particles (Si fine particles)

The diameter, Dav, defined by the following equation was 50 nm.

$$Dav=6/(\rho \times BET)$$

Here, the fine particles were assumed to be dense spheres having an average diameter Dav.
The BET specific surface area ($m^2/g$) based on the nitrogen gas adsorption method was 51.5 $m^2/g$.
$\rho$ represents a true density of silicon particles, and 2.33 $g/cm^3$ as a theoretical value was adopted.
The oxygen content in the Si fine particles measured with inductively coupled plasma (ICP) was 5.8 mass%.
By observing the silicon-containing particles with an electron microscope at 100,000-fold magnification, and a quantification by image analysis of 200 primary particle randomly selected showed that 50% diameter Dn50 in a number-based accumulated distribution was 48 nm and 90% diameter Dn90 was 182 nm.

(2) Pitch

Petroleum pitch (softening point: 220°C). Measurement by thermal analysis under a nitrogen gas flow showed that this petroleum pitch had a residual carbon ratio of 52% at 1,100°C.
The QI content and TI content of the petroleum pitch measured by a method disclosed in JIS K2425 or a method in conformity thereto were 0.62% and 48.9%, respectively.

(3) Graphite particles

The physical properties of the particles (A2), the graphite-containing substance (B) and the graphite-containing substance (C) used in the following Examples are shown in Table 2.

Table 2

| | | A2 | Graphite (1) | Graphite (2) | Graphite (3) | Graphite (4) |
|---|---|---|---|---|---|---|
| Area: SOP | $\mu m^2$ | 5.0 | 12.0 | 5.0 | 29.7 | - |
| Aspect ratio: AROP | | 2.2 | 2.1 | 2.2 | 2.1 | - |
| Average particle diameter Dv50 | $\mu m$ | 6.7 | 12.1 | 6.7 | 21.0 | 11.9 |
| $(SOP \times AROP)^{1/2}/Dv50$ | | 0.50 | 0.41 | 0.50 | 0.38 | - |
| $d_{002}$ | nm | 0.3357 | 0.3357 | 0.3357 | 0.3365 | 0.3357 |
| Lc | nm | 104 | 108 | 104 | 60 | 151 |
| BET specific surface area | $m^2/g$ | 6.1 | 2.5 | 6.1 | 1.5 | 3.8 |
| Total pore volume | $\mu L/g$ | 32.0 | 10.5 | 32.0 | 9.3 | - |
| Average circularity | | 0.88 | 0.89 | 0.88 | 0.97 | - |
| $I_{110}/I_{004}$ | | 0.28 | 0.11 | 0.28 | 0.65 | - |

In the Examples, various physical properties were measured according to the following methods. Observation and data analysis of optical structures, measurement of an average lattice spacing ($d_{002}$) based on X-ray diffractometry, Lc, and R value are conducted by the methods described in detail in the "Mode for carrying out invention" section of this description. In addition, measurement of other physical properties and battery evaluation were performed as described below.

(Powder XRD measurement)

Carbon powder samples were filled in a sample plate made of glass (recessed portion of a sample plate: 18x20 mm, depth: 0.2 mm) and subjected to measurement under the following conditions:

XRD apparatus: SmartLab (trademark) manufactured by Rigaku X-ray type: Cu-K$\alpha$ ray
Method for removing K$\beta$ ray: Ni filter
X-ray output: 45 kV, 200 mA
Measurement range: 5.0 to 10.0 deg.
Scanning speed: 10.0 deg./min.

Profile fitting was performed by smoothing the obtained waveform, removing the background, and removing K$\alpha$2. From the obtained $I_{004}$ as the peak intensity of (004) plane and $I_{110}$ as the peak intensity of (110) plane, the peak intensity ratio $I_{110}/I_{004}$ as an index of orientation was calculated. As a peak on each plane, the highest intensity within the range as described below was selected, respectively.

(004) plane: 54.0 to 55.0 deg.
(110) plane: 76.5 to 78.0 deg.

(Average circularity)

The carbon material was purified by allowing it to pass through a filter with 106 $\mu$m openings to remove fine refuse. 0.1 g of the obtained sample was added to 20 ml of ion-exchanged water and uniformly dispersed by adding 0.1 to 0.5 mass% of surfactant to prepare the sample solution for the measurement. The dispersion was performed by treating the mixture for five minutes using ultrasonic washing machine UT-105S (manufactured by Sharp Manufacturing Systems Corporation).
The obtained sample solution for the measurement was put in a flow-type particle image analyzer FPIA-2100 (manufactured by Sysmex Corporation) and 10,000 particles were subjected to image analysis in the LPF mode. The median value of the obtained circularity of each particle was taken as an average circularity.

(Measurement of pore volume)

About 5 g of a carbon material was weighed out in a cell made of glass, and after drying it under reduced pressure of 1 kPa or less at 300°C for about 3 hours to remove adsorbed components such as water, the mass of the carbon material was measured. Subsequently, the nitrogen-gas adsorption isotherm of the dried carbon material in liquid nitrogen cooling was measured by Autosorb-1 manufactured by Quantachrome Instruments. A total pore volume of pores having a diameter of 0.4 $\mu$m or less was determined from the nitrogen adsorption amount at the measurement points of $P/P_0$=0.992 to 0.995 on the obtained adsorption isotherm and the mass of the graphite powder after drying.

(Particle Diameter Dv50)

Two micro spatulas of powder and two drops of a non-ionic surfactant (TRITON (trademark)-X; manufactured by Roche Applied Science) were added to 50 ml of water, and ultrasonically dispersed for 3 minutes. The dispersion was loaded in a laser diffraction particle size distribution measuring apparatus (LMS-2000e, manufactured by Seishin Enterprise Co., Ltd.) and a 50% diameter Dv50 was measured.

(Specific surface area)

The specific surface area was measured according to the multipoint BET method by a surface area/pore size analyzer (NOVA 4200e, produced by Quantachrome Instruments) using nitrogen gas as a probe gas under a relative pressure of 0.1, 0.2 and 0.3.

(Production of Positive Electrode Sheet)

192 g of LiNi$_{0.6}$Mn$_{0.2}$Co$_{0.2}$O$_2$, 4 g of carbon black serving as a conductive assistant, and 4 g of polyvinylidene fluoride (PVdF) serving as a binder were stirred and mixed while N-methyl-pyrrolidone was appropriately added thereto. Thus, a slurry paste for a positive electrode was obtained.
The paste for a positive electrode was applied onto an aluminum foil having a thickness of 20 $\mu$m with a roll coater, followed by drying, to yield a sheet for a positive electrode. The electrode after the drying was pressed to a density of 3.6 g/cm$^3$ with a roll press. Thus, a positive electrode sheet for battery evaluation was obtained.

(Production of Negative Electrode Sheet)

Carboxymethylcellulose (CMC; manufactured by Daicel FineChem Ltd.; CMC1300) was used as a binder. Specifically, an aqueous solution in which CMC was dissolved in a solid content of 2% was prepared.

Carbon black, carbon nanotube (CNT) and a vapor grown carbon fiber (VGCF(trademark)-H, manufactured by Showa Denko K.K.) were prepared as conductive assistants, and a mixed conductive assistant obtained by mixing those assistants at a ratio of 3:1:1 (mass ratio) was used.

90 Parts by mass of each mixture of the composite (A), the graphite-containing substance (B) and the graphite-containing substance (C) produced in Examples and Comparative Examples, and 2 parts by mass of the mixed conductive assistant were mixed with the CMC solution so as to have a CMC solid content of 8 parts by mass, followed by kneading with a planetary centrifugal mixer. Thus, a paste for a negative electrode was obtained.

The paste for a negative electrode was uniformly applied onto a copper foil having a thickness of 20 $\mu$m with a doctor blade so as to achieve a thickness of 300 $\mu$m, followed by drying with a hot plate and then vacuum drying. Thus, a sheet for a negative electrode was obtained. The electrode after the drying was pressed with a uniaxial press machine at a pressure of 300 MPa. Thus, a negative electrode sheet for battery evaluation was obtained.

(Measurement of Electrode Density)

The electrode density when the negative electrode sheet produced as described above was subjected to pressing of 100 MPa was measured. The electrode density is the mass per volume of the portion of the above-mentioned negative electrode sheet excluding the current collector Cu foil. A uniaxial press machine was used for conducting the experiment.

(Fine Adjustment of Capacity Ratio of Positive Electrode to Negative Electrode)

When a lithium ion battery is produced by allowing a positive electrode sheet and a negative electrode sheet to face each other, it is necessary to consider balance between the capacities of the electrodes. That is, when the capacity of a negative electrode, which is a lithium ion accepting side, is too low, Li excessively precipitates on the negative electrode side to cause deterioration in cycle characteristics. In contrast, when the capacity of the negative electrode is too high, an energy density is reduced through charge and discharge in a low load state, while the cycle characteristics are improved. In order to prevent the foregoing, the discharge amount of the negative electrode sheet per weight of an active material was evaluated in advance in a half cell using Li as a counter electrode, and the capacity of the negative electrode sheet was finely adjusted so that the ratio of the capacity of the negative electrode sheet ($Q_A$) to the capacity of the positive electrode sheet ($Q_C$) was a constant value of 1.2, while the same positive electrode sheet was used.

(Production of Battery for Evaluation)

The following operation was performed in a glove box in which a dry argon gas atmosphere having a dew point of -80°C or less was retained.

[Two-electrode laminated-type full cell]

The negative electrode sheet and the positive electrode sheet were punched to yield a negative electrode piece and a positive electrode piece each having an area of 20 cm$^2$, respectively. An Al tab and a Ni tab were attached to the Al foil of the positive electrode piece and the Cu foil of the negative electrode piece, respectively. A film microporous membrane made of polypropylene was sandwiched between the negative electrode piece and the positive electrode piece, and the resultant was packed in an aluminum laminate package in this state. In addition, an electrolytic solution was injected thereinto. After that, an opening was sealed through heat fusion. Thus, a battery for evaluation was produced. It should be noted that the electrolytic solution was a solution obtained by mixing 1 mass% of vinylene carbonate (VC) and 10 mass% of fluoroethylene carbonate (FEC) with a solvent obtained by mixing ethylene carbonate, ethyl methyl carbonate, and diethyl carbonate at a ratio of 3:5:2 in terms of volume ratio, and further dissolving therein LiPF$_6$ as an electrolyte at a concentration of 1 mol/L.

[Three-electrode laminated-type half cell]

The negative electrode sheet was punched to obtain a negative electrode piece having an area of 4 cm$^2$ (provided with a Cu-foil tab) and a Li roll was punched out to obtain a Li piece having an area of 7.5 cm$^2$ (3.0 cm x 2.5 cm) for a counter electrode and a Li piece having an area of 3.75 cm$^2$ (1.5 cm x 2.5 cm) for a reference electrode. A Ni tab having a width of 5 mm was prepared for a counter electrode and a reference electrode, respectively, and a Ni mesh 5 mm X 20 mm in size was fixed to the 5 mm portion on the tip of the Ni tab. In this case, the 5 mm width of the Ni tab coincides with the 5 mm width of the Ni mesh. The Cu foil tab of the negative electrode piece was attached to the Ni tab of the working electrode. The Ni mesh at the tip of the Ni tab for the counter electrode was attached to the corner of the Li piece so as to be vertical to the 3.0 cm side of the Li piece for the counter electrode. The Ni mesh at the tip of the Ni tab for the reference electrode was attached to the center of the 1.5 cm side of the Li piece so as to be vertical to the 1.5 cm side of the Li piece for the reference electrode. A polypropylene microporous film was sandwiched between the working electrode and the counter electrode, and the reference electrode is located near the working electrode so that liquid junction is provided through the polypropylene microporous film without causing short circuit, and the resultant was packed in an aluminum laminate package in this state. An electrolytic solution was injected thereinto. After that, an opening was sealed through heat fusion. Thus, a battery for evaluation was produced. The electrolytic solution was a solution obtained by mixing 1 mass% of vinylene carbonate (VC) and 10 mass% of fluoroethylene carbonate (FEC) with a solvent obtained by mixing ethylene carbonate, ethyl methyl carbonate, and diethyl carbonate at a ratio of 3:5:2 in terms of volume ratio, and further dissolving therein LiPF$_6$ as an electrolyte at a concentration of 1 mol/L, which is the same as in the two-electrode laminated-type full cell.

(Definition of Charge, Discharge)

In the Examples and the Comparative Examples, the negative electrode materials were evaluated by using both of the three-electrode laminated-type half cell and the two-electrode laminated-type full cell. Here, the meaning of charge/discharge of the negative electrode is different in the two cells.

Charge means to apply voltage to a cell, and discharge is an operation to consume voltage of a cell.

In the case of the three-electrode laminated-type half cell, a counter electrode is Li metal and the negative electrode sheet is substantially treated as a positive electrode. Therefore, charge in the three-electrode laminated-type half cell means the operation of releasing Li ions from the negative electrode sheet. On the other hand, discharge in the three-electrode laminated-type half cell means the operation of inserting Li ions into the negative electrode.

In contrast, in the case of the two-electrode laminated-type full cell, the counter electrode employs not Li metal but a material having a higher oxidation-reduction potential than the negative electrode sheet. Therefore, the negative electrode sheet is treated as a negative electrode. Accordingly, in the two-electrode laminated-type full cell, charge means the operation of inserting Li ions into the negative electrode sheet and discharge means the operation of releasing Li ions from the negative electrode sheet.

(Measurement tests of initial Li ion release capacity and initial coulomb efficiency)

Tests were conducted using a three-electrode laminated-type half cell. Constant current (CC) discharging was performed at a current of 0.1 C from a rest potential to 0.005 V vs. Li/Li$^+$. Next, the discharging was switched to constant voltage (CV) discharging at 0.005 V vs. Li/Li$^+$ with a cut-off current value of 0.005 C.

A charging was performed in the constant-current mode at a current of 0.1 C with an upper limit voltage of 1.5 V vs. Li/Li$^+$.

The test was performed in a thermostatic chamber set at 25°C. At that time, the capacity at the initial Li ion release capacity from the working electrode was defined as an initial Li ion release capacity. Also, the ratio of the electricity of the initial charge and discharge, i.e. Li ion release electricity quantity/Li ion insertion electricity quantity in percentage was defined as an index of the initial coulomb efficiency.

(Charge-discharge Cycle Test Using Three-electrode Laminated-type Half Cell)

When a charge-discharge cycle test was conducted using a three-electrode laminated type half cell, it was conducted with a charge-discharge scheme different from that of the above-mentioned measurement test of the initial Li ion release capacity and the initial coulomb efficiency.

Aging was performed by conducting 6 charge and discharge cycles. In the first cycle of the aging, CC discharging was performed at a current of 0.05 C from a rest potential to 0.005 V vs. Li/Li$^+$. A charging was performed in the CC mode at a current of 0.05 C with an upper limit voltage of 1.5 V vs. Li/Li$^+$. In the second to sixth cycle of the aging, after performing CC discharging at a current of 0.2 C to 0.005 V vs. Li/Li$^+$, the discharging was switched to a CV mode discharging at 0.005 V vs. Li/Li$^+$ with a cut-off current value of 0.025 C. A charging was performed in the CC mode at a current of 0.2 C with an upper limit voltage of 1.5 V vs. Li/Li$^+$.

After performing the aging, a charge-discharge cycle test was performed by the following method.

The discharging was performed in a CC mode at a current value of 1 C to 0.005 V vs. Li/Li$^+$, the discharging was switched to a CV mode discharging with a cut-off current value of 0.025 C.

A charging was performed in the CC mode at a current of 1 C to 1.5 V vs. Li/Li$^+$.

The charging and discharging operations were performed 20 cycles when the above-mentioned charging and discharging operations were defined as 1 cycle, and the current value of 1 C was changed to 0.1 C in the 21st cycle to perform a low rating test. The 21st cycle test was repeated five times and 105 cycles in total were performed as the charge-discharge cycle test.

A charge (Li ion release) capacity retention rate after the 100th cycle defined by the following equation was calculated.

$$\text{(Charge (Li ion release) capacity retention rate after 100th cycle (\%))} = \text{(Charge capacity in 100th cycle)}/\text{(Charge capacity in first cycle)} \times 100$$

The average coulomb efficiency from the first cycle to the 100$^{th}$ cycle was defined by the following equation.

$$\text{(Average coulomb efficiency (from first cycle to 100}^{th}\text{ cycle))} = \text{(Total of the coulomb efficiency from first cycle to 100}^{th}\text{ cycle)}/100$$

In the above-described two equations, the "charge capacity in the first cycle" means the first cycle after the completion of the aging. The coulomb efficiency after the Nth cycle was calculated as follows: Li ion release electricity quantity/Li ion insertion electricity quantity in percentage.

The charge-discharge curb can be expressed by putting the potential and the electricity quantity on the vertical axis and the horizontal axis, respectively. The average charge potential was determined by signal-averaging of the potentials from the beginning to the end of the Li ion release (charging).

(Charge-discharge Cycle Test Using Two-electrode Laminated-type Full Cell)

When a charge-discharge cycle test was conducted using a two-electrode laminated-type full cell, aging was performed by conducting 5 charge and discharge cycles. In the first cycle of the aging, CC charging was performed at a current of 0.025 C from a rest potential for 6 hours and 45 minutes and 12-hour break was given. Next, CC charging was further performed at a current of 0.05 C to 4.2 V. A discharging was performed in the CC mode at a current of 0.05 C to 2.7 V. The second cycle and the fifth cycle of the aging were performed under the same conditions: after performing CC charging at a current of 0.1 C to 4.3 V, the charging was switched to a CV mode charging with a cut-off current value of 0.025 C. A discharging was performed in the CC mode at a current of 0.1 C to 2.7 V. The third cycle and the fourth cycle of the aging were performed under the same conditions by only changing the current value of 0.1 C in the second and the fifth cycles to 0.2 C.

After performing the aging, a charge-discharge cycle test was performed by the following method.

The charging was performed in a CC mode at a current value of 1 C to 4.3 V, the charging was switched to a CV mode charging with a cut-off current value of 0.05 C.

A discharging was performed in the CC mode at a current of 1 C to 3.0 V.

The charging and discharging operations were performed 20 cycles when the above-mentioned charging and discharging operations were defined as 1 cycle, and the current value of 1 C was changed to 0.1 C in the 21st cycle to perform a low rating test. The 21st cycle test was repeated 24 times and 504 cycles in total were performed as the charge-discharge cycle test.

The discharge capacity retention rate after the Nth cycle defined by the following equation was calculated.

(Discharge capacity retention rate after Nth cycle

(%))=(discharge capacity in Nth cycle)/(discharge capacity in

initial cycle)×100

In the equation, the discharge capacity in the initial cycle means the first cycle after the completion of the aging.

Example 1

Petroleum-based coke was pulverized and the resultant was subjected to heat treatment in Acheson furnace at 3000°C to obtain artificial graphite particles that are not flaky and have Dv50 of 7.5 $\mu$m and a BET specific surface area of 4.9 m$^2$/g.

Next, 20 parts by mass of the above-mentioned silicon-containing particles and 19 parts by mass of the above-mentioned petroleum pitch (as the mass of the petroleum pitch after being carbonized) were charged in a separable flask. Nitrogen gas was allowed to flow therein to maintain an inert atmosphere, and the temperature of flask was raised to 250°C. The content was stirred by a mixer rotating at 500 rpm to thereby uniformly mix the pitch and the silicon-containing particles. The resultant was cooled to be solidified to obtain a mixed product.

61 parts by mass of the artificial graphite particles that are not flaky were added to the mixed product, and the resultant was charged in a rotary cutter mill. The resultant was stirred at a speed as high as 25000 rpm, while maintaining an inert atmosphere by allowing a nitrogen gas to flow, to be mixed.

The mixture was placed in a sintering furnace, heated to 1100°C at a temperature increase rate of 150°C/h under the nitrogen gas stream, and maintained at 1100°C for one hour. The mixture was cooled to room temperature and taken out of the sintering furnace. After pulverizing the mixture by a rotary cutter mill, the pulverized product was sieved with a sieve having a mesh size of 45 $\mu$m. The undersize product was obtained as composite (1).

Table 3 shows the powder properties of the composite (1) .

In addition, petroleum-based coke was pulverized and subjected to heat treatment at 3000°C in Acheson furnace to obtain graphite (1) that is graphite particles that are not flaky and have Dv50 of 12.1 $\mu$m and a BET specific surface area of 2.5 m$^2$/g and graphite (2) that is graphite particles that are not flaky and have Dv50 of 6.7 $\mu$m and a BET specific surface area of 6.1 m$^2$/g.

79 parts by mass of the composite (1), 10.5 parts by mass of the graphite (1) and 10.5 parts by mass of the graphite (2) were mixed to obtain a negative electrode material. A negative electrode sheet was manufactured by using the negative electrode material. The electrode density of the negative electrode sheet and the battery properties were measured and Table 3 shows the results.

Example 2

Composite (2) was obtained in the same way as in Example 1 except that the quantity of the silicon-containing particles, the quantity of the petroleum pitch (as the mass of the petroleum pitch after being carbonized) and the quantity of the artificial graphite particles that are not flaky were changed to 28 parts by mass, 27 parts by mass and 45 parts by mass, respectively.

48 parts by mass of the composite (2), 26 parts by mass of the graphite (1) and 26 parts by mass of the graphite (2) were mixed to obtain a negative electrode material. A negative electrode sheet was manufactured by using the negative electrode material. The electrode density of the negative electrode sheet and the battery properties were measured and Table 3 shows the results.

In Example 2, the initial coulomb efficiency, the charge capacity retention rate after the 100th cycle, the average coulomb efficiency, the average charge potential in a three-electrode laminated-type half cell, and the discharge capacity retention rate after the 100$^{th}$ cycle in a two-electrode laminated-type full cell are improved compared to Example 1. This is because electron-conducting paths increased due to increase in the graphite quantity to be mixed with the composite, resulting in decrease in resistance, and furthermore the region of the composite in which side reactions take place was reduced.

It can be seen from this that as the more graphite is added to the composite, a greater effect of the invention can be obtained.

Example 3

20 parts by mass of the composite (2), 40 parts by mass of the graphite (1) and 40 parts by mass of the graphite (2) were mixed to obtain a negative electrode material. A negative electrode sheet was manufactured by using the negative electrode material. The electrode density of the negative electrode sheet and the battery properties were measured and Table 3 shows the results.

Similar to the relation of Example 2 to Example 1, a larger amount of graphite is blended in the composite in Example 3. When looking at various properties in Table 3, Example 3 exhibits better properties than Examples 1 and 2.

It can be seen from these facts that, similar to Example 2, as the more graphite is added to the composite, a greater effect of the invention can be obtained.

Comparative Example 1

79 parts by mass of the composite (1) and 21 parts by mass of the graphite (1) were mixed to obtain a negative electrode material (4). A negative electrode sheet was manufactured by using the negative electrode material. The electrode density of the negative electrode sheet and the battery properties were measured and Table 3 shows the results.

The electrode density is lower in Comparative Example 1 compared to Example 1. This is because the graphite (2) having a smaller diameter than the graphite (1) that entered in the voids between the particles of the composite (1) in Example 1 was lost.

The charge capacity retention rate after the 100th cycle, the average coulomb efficiency, and the average charge potential in a three-electrode laminated-type half cell are reduced. This is because the graphite (2) that entered in the voids between the particles of the composite (1) in Example 1 was lost, which reduced electron-conducting paths, resulting in increase in resistance, and furthermore increased the region of the composite in which side reactions take place.

It can be seen from this that it is necessary to use a graphite having a large diameter and a graphite having a small diameter in combination to obtain the effect of the present invention.

Comparative Example 2

A negative electrode sheet was manufactured by using a negative electrode material comprising the composite (1) only. The electrode density of the negative electrode sheet and the battery properties were measured and Table 3 shows the results.

The electrode density is lower in Comparative Example 2 compared to Examples 1 to 3 and Comparative Example 1. This is because the graphite that entered in the voids between the particles of the composite (1) was lost.

The average charge potential is higher in in Comparative Example 2 compared to Examples 1 to 3 and Comparative Example 1. This is because of the high resistance due to many voids existing in the negative electrode material having a low electrode density of Comparative Example 2.

The region of the composite (1) in which side reactions take place is increased and the coulomb efficiency is reduced in Comparative Example 2 compared to Examples 1 to 3 and Comparative Example 1.

For these reasons, the capacity retention rates after the 100th cycle in the two-electrode laminated-type full cell and the three-electrode laminated-type half cell are significantly reduced in Comparative Example 2 compared to Examples 1 to 3 and Comparative Example 1.

As described above, it can be seen that it is necessary to mix graphite into the composite to obtain the effect of the present invention.

Comparative Example 3

Graphite particles that are not flaky and have Dv50 of 21.0 $\mu$m and a BET specific surface area of 1.5 m$^2$/g were used as graphite (3).

79 parts by mass of the composite (1), 10.5 parts by mass of the graphite (3) and 10.5 parts by mass of the graphite (2) were mixed to obtain a negative electrode material. A negative electrode sheet was manufactured by using the negative electrode material. The electrode density of the negative electrode sheet and the battery properties were measured and Table 3 shows the results.

The electrode density in Comparative Example 3 is comparable to that of Example 1, but the capacity retention rates after the 100th cycle in the two-electrode laminated-type full cell and the three-electrode laminated-type half cell are low compared to Example 1.

This is because Dv50 of the graphite (3) is 21.0 $\mu$m, and the resistance is increased due to long electron migration distance and Li-ion diffusion distance inside the graphite particles.

It can be seen from this that it is necessary to control Dv50 of the graphite to be mixed into the composite to 20 $\mu$m or less.

Comparative Example 4

Petroleum-based coke was pulverized and the resultant was subjected to heat treatment in Acheson furnace at 3000°C to obtain graphite (4), which is graphite particles that are not flaky and have Dv50 of 11.9 $\mu$m and a BET specific surface area of 3.8 m$^2$/g.

79 parts by mass of the composite (1), 10.5 parts by mass of the graphite (1) and 10.5 parts by mass of the graphite (4) were mixed to obtain a negative electrode material. A negative electrode sheet was manufactured by using the negative electrode material. The electrode density of the negative electrode sheet and the battery properties were measured and Table 3 shows the results.

The electrode density, and the average charge potential, the charge capacity retention rate after the 100th cycle, and the average coulomb efficiency in a three-electrode laminated-type half cell are reduced in Comparative Example 4 compared to Example 1. This is because the difference between the graphite (1) and the graphite (4) in Dv50 is only 0.2 $\mu$m and the two are regarded as being substantially the same kind of graphite. As a result, the negative electrode material exhibits performance comparable to that of Comparative Example 1.

It can be seen from this that a difference in Dv50 of 4.0 $\mu$m or more is required between two kinds of graphite to be mixed in the composite to obtain the effect of the present invention.

Table 3

| | | Example 1 | Example 2 | Example 3 | Comparative Example 1 | Comparative Example 2 | Comparative Example 3 | Comparative Example 4 |
|---|---|---|---|---|---|---|---|---|
| Composite (A) | Kind | Composite (1) | Composite (2) | Composite (2) | Composite (1) | Composite (1) | Composite (1) | Composite (1) |
| | Dv50 [μm] | 16.6 | 16.4 | 16.4 | 16.6 | 16.6 | 16.6 | 16.6 |
| | Specific surface area [m$^2$/g] | 1.8 | 2.4 | 2.4 | 1.8 | 1.8 | 1.8 | 1.8 |
| Substance (B) | Kind | Graphite (1) | Graphite (1) | Graphite (1) | Graphite (1) | - | Graphite (3) | Graphite (1) |
| | Dv50 [μm] | 12.1 | 12.1 | 12.1 | 12.1 | - | 21.0 | 12.1 |
| Substance (C) | Kind | Graphite (2) | Graphite (2) | Graphite (2) | - | - | Graphite (2) | Graphite (4) |
| | Dv50 [μm] | 6.7 | 6.7 | 6.7 | - | - | 6.7 | 11.9 |
| Ratio of Particle (A1) in Composite (A) (A1) /(A1+A2+A3) [mass%] | | 20 | 28 | 28 | 20 | 20 | 20 | 20 |
| Ratio of Composite (A) (A)/(A+B+C) [mass%] | | 79 | 48 | 20 | 79 | 100 | 79 | 79 |
| Difference in Dv50 between Substance (B) and Substance (C) [μm] | | 5.4 | 5.5 | 5.5 | | | 14.3 | 0.2 |
| Electrode density [g/cm$^3$] | Pressing pressure: 100 MPa | 1.46 | 1.50 | 1.52 | 1.37 | 1.29 | 1.42 | 1.36 |

(continued)

| | | Example 1 | Example 2 | Example 3 | Comparative Example 1 | Comparative Example 2 | Comparative Example 3 | Comparative Example 4 |
|---|---|---|---|---|---|---|---|---|
| Three-electrode laminated-type half cell | Initial charge (Li ion release) capacity [mAh/g] | 574 | 597 | 471 | 602 | 593 | 582 | 592 |
| | Initial coulomb efficiency [%] | 88.1 | 89.8 | 90.1 | 88.5 | 87.7 | 89.0 | 88.6 |
| | Average charge potential at 10th cycle [mV] | 403.3 | 391.4 | 389.9 | 413.5 | 422.3 | 420.1 | 415.0 |
| | Capacity retention rate after the 100th cycle [%] | 94.8 | 95.7 | 96.1 | 81.3 | 70.2 | 73.0 | 82.1 |
| | Average coulomb efficiency (1-100 cycles) [%] | 99.71 | 99.77 | 99.79 | 99.68 | 99.38 | 99.53 | 99.65 |
| Two-electrode laminated-type full cell | Capacity retention rate after the 100th cycle [%] | 86.4 | 91.6 | 96.6 | 90.7 | 79.3 | 73.0 | 87.2 |

**Claims**

1. A negative electrode material for a lithium-ion secondary battery comprising:

   Composite (A) having a 50% particle diameter in a volume-based cumulative particle diameter distribution, Dv50, of 3.0 $\mu$m or more and 20.0 $\mu$m or less; comprising:

   Particles (A1), which are formed of a substance comprising an element capable of occluding and releasing lithium ions and not comprising graphite and have a 50% particle diameter in a number-based cumulative particle diameter distribution, Dn50, of primary particles of 70 nm or less,
   Particles (A2), which are formed of a substance comprising graphite and have Dv50 of 3.0 $\mu$m or more and 20.0 $\mu$m or less and a BET specific surface area of 1.0 to 10.0 m$^2$/g, and
   Carbonaceous material (A3), which is a carbonized substance of an organic substance formed on a surface of the Particles (A1);
   a first graphite-containing substance (B) having Dv50 of 5.0 $\mu$m or more and 20.0 $\mu$m or less; and
   a second graphite-containing substance (C) having Dv50 of 1.0 $\mu$m or more and 10.0 $\mu$m or less;

   wherein the ratio of the Particles (A1) to the total of the Particles (A1), the Particles (A2) and the Carbonaceous material (A3) is 2 mass% or more and 40 mass% or less;
   Dv50 of the graphite-containing substance (B) is larger than that of the graphite-containing substance (C) by 4.0 $\mu$m or more; and
   the ratio of the Composite (A) to the total of the Composite (A), the graphite-containing substance (B) and the graphite-containing substance (C) is 4 mass% and more and 85 mass% or less.

2. The negative electrode material for a lithium-ion secondary battery according to claim 1, wherein the element capable of occluding and releasing lithium ions contained in the Particles (A1) is at least one member selected from a group consisting of Si, Sn, Ge, A1 and In.

3. The negative electrode material for a lithium-ion secondary battery according to claim 1 or 2, wherein the Particles (A2) include substance derived from petroleum-based coke and/or pitch-based coke.

4. The negative electrode material for a lithium-ion secondary battery according to any one of claims 1 to 3, wherein the Parciles (A2) are non-flaky artificial graphite particles and have a ratio between a peak intensity I110 of (110) plane and a peak intensity I004 of (004) plane of a graphite crystal determined by a powder X-ray diffraction method, I110/I004, is 0.10 or more and 0.35 or less; an average interplanar spacing d002 of (002) plane by an X-ray diffraction method is 0.3360 nm or less; an average circularity is 0.80 or more and 0.95 or less; and a total pore volume of pores having a diameter of 0.4 $\mu$m or less measured by a nitrogen gas adsorption method is 5.0 $\mu$l/g or more and 40.0 $\mu$l/g or less;
   wherein SOP, AROP and Dv50 satisfy the following relationships:

$$1.5 \leq AROP \leq 6.0$$

   and

$$0.20 \times Dv50 \leq (SOP \times AROP)^{1/2} < 2.00 \times Dv50$$

   wherein, for optical structures observed in a cross-section of the artificial graphite particles by a polarizing microscope; when areas of the optical structures are accumulated from a smallest optical structure in an ascending order, SOP is defined as an area of an optical structure whose accumulated area corresponds to 60% of a total area of all the optical structures;
   when the optical structures are counted from an optical structure of a smallest aspect ratio in an ascending order, AROP is defined as an aspect ratio of an optical structure which ranks at a position of 60% in a total number of all the optical structures.

5. The negative electrode material for a lithium-ion secondary battery according to claim 4, wherein both of the graphite-containing substance (B) and the graphite-containing substance (C) are non-flaky artificial graphite particles and have a ratio between a peak intensity I110 of (110) plane and a peak intensity I004 of (004) plane of a graphite crystal determined by a powder X-ray diffraction method, I110/I004, is 0.10 or more and 0.35 or less; an average interplanar spacing d002 of (002) plane by an X-ray diffraction method is 0.3360 nm or less; an average circularity is 0.80 or more and 0.95 or less; and a total pore volume of pores having a diameter of 0.4 $\mu$m or less measured by a nitrogen gas adsorption method is 5.0 $\mu$l/g or more and 40.0 $\mu$l/g or less;

wherein, SOP, AROP and Dv50 satisfy the following relationships:

$$1.5 \leq AROP \leq 6.0$$

and

$$0.20 \times Dv50 \leq (SOP \times AROP)^{1/2} < 2.00 \times Dv50$$

wherein, for optical structures observed in a cross-section of the artificial graphite particles by a polarizing microscope; when areas of the optical structures are accumulated from a smallest optical structure in an ascending order, SOP is defined as an area of an optical structure whose accumulated area corresponds to 60% of a total area of all the optical structures;

when the optical structures are counted from an optical structure of a smallest aspect ratio in an ascending order, AROP is defined as an aspect ratio of an optical structure which ranks at a position of 60% in a total number of all the optical structures.

6. A negative electrode sheet having a current collector and a negative electrode layer which covers the current collector, wherein the negative electrode layer comprises a binder, a conductive assistant, and the negative electrode material for a lithium-ion secondary battery according to any one of claims 1 to 5.

7. A lithium-ion secondary battery comprising the negative electrode sheet according to claim 6.

**INTERNATIONAL SEARCH REPORT**

| International application No. |
| --- |
| PCT/JP2017/032440 |

**A. CLASSIFICATION OF SUBJECT MATTER**
*H01M4/38*(2006.01)i, *C01B32/20*(2017.01)i, *H01M4/133*(2010.01)i, *H01M4/134*
(2010.01)i, *H01M4/36*(2006.01)i, *H01M4/587*(2010.01)i

According to International Patent Classification (IPC) or to both national classification and IPC

**B. FIELDS SEARCHED**

Minimum documentation searched (classification system followed by classification symbols)
H01M4/38, C01B32/20, H01M4/133, H01M4/134, H01M4/36, H01M4/587

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 5799500 B2 (Hitachi Chemical Co., Ltd.), 28 October 2015 (28.10.2015), claim 1 (Family: none) | 1-7 |
| A | JP 2012-124115 A (Hitachi Chemical Co., Ltd.), 28 June 2012 (28.06.2012), claim 1 & US 2013/0302675 A1 claim 1 & WO 2012/077785 A1 & EP 2650954 A1 & TW 201230475 A & CN 103262314 A & KR 10-2013-0087609 A | 1-7 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 September 2017 (27.09.17) | 10 October 2017 (10.10.17) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

International application No.

PCT/JP2017/032440

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2008-186732 A  (Nippon Carbon Co., Ltd.), 14 August 2008 (14.08.2008), claim 1 (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5799500 B
- JP 4320526 B
- US 8092940 B2
- JP 5046302 B
- JP 2004095306 A

### Non-patent literature cited in the description

- Modern Carbon Material Experimental Technology (Analysis part) edited by The Carbon Society of Japan. Sipec Corporation, 2001, 1-8
- **I. NODA ; M. INAGAKI.** 117th Committee material. Japan Society for the Promotion of Science, 1963, 117-71, A-1
- **M. INAGAKI et al.** 117th committee material. Japan Society for the Promotion of Science, 1972, 117-121, C-5
- **M. INAGAKI.** *carbon,* 1963, 25-34